# EUROPEAN PATENT APPLICATION

(11) **EP 4 663 668 A1**
(43) Date of publication of application: **17.12.2025**
(21) Application number: 24756922.1
(22) Date of filing: 14.02.2024
(51) Int. Cl.: C08F 6/16, C08F 2/22, C08F 14/18

(54) **METHOD FOR PRODUCING FLUOROPOLYMER AQUEOUS DISPERSION, AND FLUOROPOLYMER AQUEOUS DISPERSION**

(30) Priority: 16.02.2023 JP 2023022932
(71) Applicant: Daikin Industries, Ltd., Osaka-shi, Osaka 530-0001 (JP)
(72) Inventor: HIGASHI, Chisato, Osaka-Shi, Osaka 530-0001 (JP); TSUJI, Masayuki, Osaka-Shi, Osaka 530-0001 (JP); KUBOUCHI, Masaki, Osaka-Shi, Osaka 530-0001 (JP); HORITA, Hideki, Osaka-Shi, Osaka 530-0001 (JP); MASUDA, Eiji, Osaka-Shi, Osaka 530-0001 (JP); TAIRA, Takahiro, Osaka-Shi, Osaka 530-0001 (JP); HIROMOTO, Jiro, Osaka-Shi, Osaka 530-0001 (JP); YAMANO, Masashi, Osaka-Shi, Osaka 530-0001 (JP); ARAKI, Yuta, Osaka-Shi, Osaka 530-0001 (JP); FUKUI, Kosuke, Osaka-Shi, Osaka 530-0001 (JP)
(74) Representative: Hoffmann Eitle
(86) International application number: PCT/JP2024/005066
(87) International publication number: WO 2024/172081

(57) **Abstract**

Provided is a method for producing a fluoropolymer aqueous dispersion, the method comprising: polymerizing a fluoromonomer in the presence of a fluorine-containing surfactant, a polymerization initiator, and an aqueous medium, thereby preparing an aqueous dispersion containing a fluoropolymer; and bubbling a gas containing oxygen into the aqueous dispersion, or bringing the aqueous dispersion into contact with an oxidizing agent, or bringing the aqueous dispersion into contact with an alcohol, thereby obtaining a fluoropolymer aqueous dispersion.

## Description

### TECHNICAL FIELD

The present disclosure relates to a method for producing a fluoropolymer aqueous dispersion and a fluoropolymer aqueous dispersion.

### BACKGROUND ART

Patent Document 1 and Patent Document 2 describe that, in the examples where tetrafluoroethylene was polymerized, the feed of tetrafluoroethylene to the autoclave was terminated, the system was maintained under nitrogen bubbling for 16 hours to remove residual monomers from the polymerization, and the latex was taken out.

### RELATED ART

### PATENT DOCUMENTS

Patent Document 1: Japanese Translation of PCT International Application Publication No. 2020-510737
Patent Document 2: Japanese Translation of PCT International Application Publication No. 2020-512447

### SUMMARY OF THE INVENTION

### PROBLEM TO BE SOLVED BY THE INVENTION

An object of the present disclosure is to provide a novel method for producing a fluoropolymer and a novel aqueous dispersion containing a fluoropolymer.

### MEANS FOR SOLVING THE PROBLEM

The present disclosure provides a method for producing a fluoropolymer aqueous dispersion, the method comprising: polymerizing a fluoromonomer in the presence of a fluorine-containing surfactant, a polymerization initiator, and an aqueous medium, thereby preparing an aqueous dispersion containing a fluoropolymer; and bubbling a gas containing oxygen into the aqueous dispersion, or bringing the aqueous dispersion into contact with an oxidizing agent, or bringing the aqueous dispersion into contact with an alcohol, thereby obtaining a fluoropolymer aqueous dispersion.

### EFFECTS OF INVENTION

An object of the present disclosure is to provide a novel method for producing a fluoropolymer and a novel aqueous dispersion containing a fluoropolymer.

### BRIEF DESCRIPTION OF DRAWING

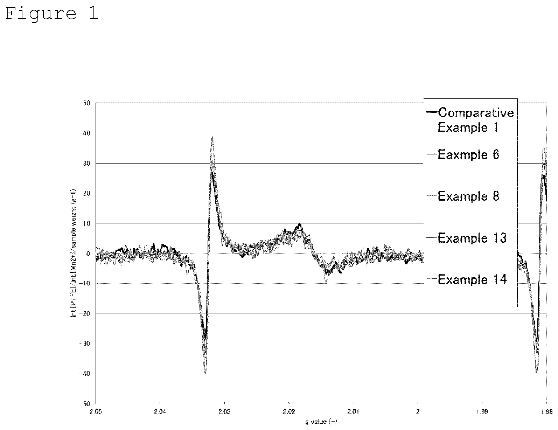

Figure 1 shows first derivative spectra obtained by analyzing aqueous dispersions obtained in Examples 6, Example 8, Example 13, Example 14, and Comparative Example 1 using electron spin resonance spectroscopy.

### DESCRIPTION OF EMBODIMENTS

Before describing the present disclosure in detail, some terms used in the present disclosure will now be defined or described.

The melt-fabricable as used herein means that a polymer has an ability to be processed in a molten state using a conventional processing device such as an extruder or an injection molding machine. Accordingly, a melt-fabricable fluororesin usually has a melt flow rate of 0.01 to 500 g/10 min as measured by the measurement method described below.

Polytetrafluoroethylene (PTFE) as used herein is preferably a fluoropolymer having a tetrafluoroethylene unit content of 99 mol% or more based on all polymerization units.

The content of each of the monomers constituting the fluoropolymer can be calculated herein by any appropriate combination of NMR, FT-IR, elemental analysis, X-ray fluorescence analysis in accordance with the type of monomer.

The "organic group" as used herein means a group containing one or more carbon atoms or a group formed by removing one hydrogen atom from an organic compound. The organic group is preferably an alkyl group optionally having one or more substituents.

A range indicated by endpoints as used herein includes all numerical values within the range (for example, the range of 1 to 10 includes 1.4, 1.9, 2.33, 5.75, 9.98, and the like).

The phrase "at least one" as used herein includes all numerical values equal to or greater than 1 (for example, at least 2, at least 4, at least 6, at least 8, at least 10, at least 25, at least 50, at least 100, and the like).

Hereinafter, specific embodiments of the present disclosure will now be described in detail, but the present disclosure is not limited to the following embodiments.

In the production method of the present disclosure, a fluoromonomer is polymerized in the presence of a fluorine-containing surfactant, a polymerization initiator, and an aqueous medium, thereby preparing an aqueous dispersion containing a fluoropolymer, and a gas containing oxygen is bubbled into the aqueous dispersion, or the aqueous dispersion is brought into contact with an oxidizing agent, or the aqueous dispersion is brought into contact with an alcohol, thereby obtaining a fluoropolymer aqueous dispersion.

Hereinafter, the steps and the materials used in the steps will now be described in detail.

### (Polymerization of fluoromonomer)

In the production method of the present disclosure, first, a fluoromonomer is polymerized in the presence of a fluorine-containing surfactant, a polymerization initiator, and an aqueous medium, thereby preparing an aqueous dispersion containing a fluoropolymer.

Polymerization of a fluoromonomer can be carried out by charging a reactor with a fluoromonomer, a fluorine-containing surfactant, a polymerization initiator, an aqueous medium, and optionally other additives, stirring the contents of the reactor, retaining the reactor at a predetermined polymerization temperature, and then adding a predetermined amount of a polymerization initiator to initiate the polymerization reaction. After the polymerization reaction is initiated, the fluoromonomer, the polymerization initiator, the fluorine-containing surfactant, a chain transfer agent, and the like may be further added depending on the purpose. The method for polymerizing the fluoromonomer is not limited, and is preferably an emulsion polymerization method.

### (Fluorine-containing surfactant)

The fluorine-containing surfactant used in the polymerization of the fluoromonomer is not limited as long it is a surfactant containing at least one fluorine atom, and conventionally known fluorine-containing surfactants can be used.

Examples of the fluorine-containing surfactant include anionic fluorine-containing surfactants. The anionic fluorine-containing surfactant may be, for example, a fluorine atom-containing surfactant having 20 or fewer carbon atoms in total in the portion excluding the anionic group.

The fluorine-containing surfactant may also be a fluorine-containing surfactant in which the molecular weight of the anionic moiety is 1,000 or less.

The "anionic moiety" means a portion of the fluorine-containing surfactant excluding the cation. For example, in the case of F(CF₂)ₙ₁COOM represented by formula (I), which will be described below, the anionic moiety is the "F(CF₂)ₙ₁COO" portion.

Examples of the fluorine-containing surfactant also include fluorine-containing surfactants having a Log POW of 3.5 or less. The Log POW is a partition coefficient between 1-octanol and water, which is represented by Log P (wherein P represents the ratio between the concentration of the fluorine-containing surfactant in octanol and the concentration of the fluorine-containing surfactant in water in a phase-separated octanol/water (1:1) liquid mixture containing the fluorine-containing surfactant).

The Log POW is calculated by performing HPLC on standard substances (heptanoic acid, octanoic acid, nonanoic acid, and decanoic acid) having a known octanol/water partition coefficient under conditions having column: TOSOH ODS-120T column (φ4.6 mm × 250 mm, manufactured by Tosoh Corporation), eluent: acetonitrile/0.6% by mass HClO₄ solution =1/1 (vol/vol %), flow rate: 1.0 ml/min, sample volume: 300 µL, column temperature: 40°C, detection light: UV 210 nm to construct a calibration curve concerning each elution time and known octanol/water partition coefficient, and determining the HPLC elution time of a sample liquid based on the calibration curve.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, and U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

Examples of the anionic fluorine-containing surfactant include a compound represented by the following general formula (N⁰):

Xⁿ⁰-Rfⁿ⁰-Y⁰ (N⁰)

wherein Xⁿ⁰ is H, Cl, or F; Rfⁿ⁰ is a linear, branched, or cyclic alkylene group having 3 to 20 carbon atoms in which some or all of H are replaced by F, the alkylene group optionally containing one or more ether bonds in which some of H are optionally replaced by Cl; and Y⁰ is an anionic group.

The anionic group Y⁰ may be -COOM, -SO₂M, or -SO₃M, and may be -COOM or -SO₃M.

M is H, a metal atom, NR⁷₄, optionally substituted imidazolium, optionally substituted pyridinium, or optionally substituted phosphonium, and R⁷ is H or an organic group.

Examples of the metal atom include alkali metals (Group 1) and alkaline earth metals (Group 2), such as Na, K, or Li.

R⁷ may be H or a C₁₋₁₀ organic group, may be H or a C₁₋₄ organic group, and may be H or a C₁₋₄ alkyl group.

M may be H, a metal atom, or NR⁷₄, may be H, an alkali metal (Group 1), an alkaline earth metal (Group 2), or NR⁷₄, and may be H, Na, K, Li, or NH₄.

In the Rfⁿ⁰, 50% or more of H atoms may be replaced by fluorine atoms.

Examples of the compound represented by general formula (N⁰) include a compound represented by the following general formula (N¹):

Xⁿ⁰-(CF₂)ₘ₁-Y⁰ (N¹)

wherein Xⁿ⁰ is H, Cl, or F; m1 is an integer of 3 to 15; and Y⁰ is as defined above;
a compound represented by the following general formula (N²):

   Rfⁿ¹-O-(CF(CF₃)CF₂O)ₘ₂CFXⁿ¹-Y⁰ (N²)

   wherein Rfⁿ¹ is a perfluoroalkyl group having 1 to 5 carbon atoms; m2 is an integer of 0 to 3; Xⁿ¹ is F or CF₃; and Y⁰ is as defined above;
a compound represented by the following general formula (N³):

   Rfⁿ²(CH₂)ₘ₃-(Rfⁿ³)_{q}-Y⁰ (N³)

   wherein Rfⁿ² is a partially or fully fluorinated alkyl group having 1 to 13 carbon atoms and optionally containing an ether bond and/or a chlorine atom; m3 is an integer of 1 to 3; Rfⁿ³ is a linear or branched perfluoroalkylene group having 1 to 3 carbon atoms, q is 0 or 1; and Y⁰ is as defined above;
a compound represented by the following general formula (N⁴):

   Rfⁿ⁴-O-(CYⁿ¹Yⁿ²)ₚCF₂-Y⁰ (N⁴)

   wherein Rfⁿ⁴ is a linear or branched, partially or fully fluorinated alkyl group having 1 to 12 carbon atoms and optionally containing an ether bond; Yⁿ¹ and Yⁿ² are the same or different and are each independently H or F; p is 0 or 1; and Y⁰ is as defined above; and
a compound represented by the following general formula (N⁵): 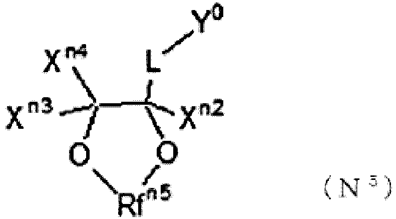 wherein Xⁿ², Xⁿ³, and Xⁿ⁴ may be the same or different and are each independently H, F, or a linear or branched, partially or fully fluorinated alkyl group having 1 to 6 carbon atoms and optionally containing an ether bond; Rfⁿ⁵ is a linear or branched partially or fully fluorinated alkylene group having 1 to 3 carbon atoms and optionally containing an ether bond; L is a linking group; and Y⁰ is as defined above, provided that the total number of carbon atoms in Xⁿ², Xⁿ³, Xⁿ⁴, and Rfⁿ⁵ is 18 or less.

More specific examples of the compound represented by the above general formula (N⁰) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

F(CF₂)ₙ₁COOM (I)

wherein n1 is an integer of 3 to 14; and M is H, a metal atom, NR⁷₄, optionally substituted imidazolium, optionally substituted pyridinium, or optionally substituted phosphonium, wherein R⁷ is H or an organic group.

The ω-H perfluorocarboxylic acid (II) described above is represented by the following general formula (II):

H(CF₂)ₙ₂COOM (II)

wherein n2 is an integer of 4 to 15; and M is as defined above.

The perfluoroethercarboxylic acid (III) is represented by the following general formula (III):

Rf¹-O-(CF(CF₃)CF₂O)ₙ₃CF(CF₃)COOM (III)

wherein Rf¹ is a perfluoroalkyl group having 1 to 5 carbon atoms; n3 is an integer of 0 to 3; and M is as defined above.

The perfluoroalkylalkylenecarboxylic acid (IV) is represented by the following general formula (IV):

Rf²(CH₂)ₙ₄Rf³COOM (IV)

wherein Rf² is a perfluoroalkyl group having 1 to 5 carbon atoms; Rf³ is a linear or branched perfluoroalkylene group having 1 to 3 carbon atoms; n4 is an integer of 1 to 3; and M is as defined above.

The alkoxyfluorocarboxylic acid (V) is represented by the following general formula (V):

Rf⁴-O-CY¹Y²CF₂-COOM (V)

wherein Rf⁴ is a linear or branched partially or fully fluorinated alkyl group having 1 to 12 carbon atoms and optionally containing an ether bond and/or a chlorine atom; Y¹ and Y² are the same or different and are each H or F; and M is as defined above.

The perfluoroalkylsulfonic acid (VI) is represented by the following general formula (VI):

F(CF₂)ₙ₅SO₃M (VI)

wherein n5 is an integer of 3 to 14; and M is as defined above.

The ω-H perfluorosulfonic acid (VII) is represented by the following general formula (VII):

H(CF₂)ₙ₆SO₃M (VII)

wherein n6 is an integer of 4 to 14; and M is as defined above.

The perfluoroalkylalkylenesulfonic acid (VIII) is represented by the following general formula (VIII):

Rf⁵(CH₂)ₙ₇SO₃M (VIII)

wherein Rf⁵ is a perfluoroalkyl group having 1 to 13 carbon atoms; n7 is an integer of 1 to 3; and M is as defined above.

The alkylalkylenecarboxylic acid (IX) is represented by the following general formula (IX):

Rf⁶(CH₂)ₙ₈COOM (IX)

wherein Rf⁶ is a linear or branched partially or fully fluorinated alkyl group having 1 to 13 carbon atoms and optionally containing an ether bond; n8 is an integer of 1 to 3; and M is as defined above.

The fluorocarboxylic acid (X) is represented by the following general formula (X):

Rf⁷-O-Rf⁸-O-CF₂-COOM (X)

wherein Rf⁷ is a linear or branched, partially or fully fluorinated alkyl group having 1 to 6 carbon atoms and optionally containing an ether bond and/or a chlorine atom; Rf⁸ is a linear or branched, partially or fully fluorinated alkyl group having 1 to 6 carbon atoms; and M is as defined above.

The alkoxyfluorosulfonic acid (XI) is represented by the following general formula (XI):

Rf⁹-O-CY¹Y²CF₂-SO₃M (XI)

wherein Rf⁹ is a linear or branched partially or fully fluorinated alkyl group having 1 to 12 carbon atoms and optionally containing an ether bond and optionally containing chlorine; Y¹ and Y² are the same or different and are each H or F; and M is as defined above.

The compound (XII) is represented by the following general formula (XII): 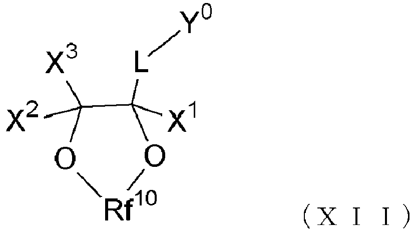 wherein X¹, X², and X³ may be the same or different and are H, F, and a linear or branched partially or fully fluorinated alkyl group having 1 to 6 carbon atoms and optionally containing an ether bond; Rf¹⁰ is a perfluoroalkylene group having 1 to 3 carbon atoms; L is a linking group; and Y⁰ is an anionic group.

Y⁰ may be -COOM, -SO₂M, or -SO₃M, and may be -SO₃M or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

Rf¹¹-O-(CF₂CF(CF₃)O)ₙ₉(CF₂O)ₙ₁₀CF₂COOM (XIII)

wherein Rf¹¹ is a fluoroalkyl group having 1 to 5 carbon atoms and containing chlorine; n9 is an integer of 0 to 3; n10 is an integer of 0 to 3; and M is as defined above. An example of the compound (XIII) is CF₂ClO(CF₂CF(CF₃)O)ₙ₉(CF₂O)ₙ₁₀CF₂COONH₄ (a mixture having an average molecular weight of 750, n9 and n10 in the formula are as defined above).

As described above, examples of the anionic fluorine-containing surfactant include a carboxylic acid-based surfactant and a sulfonic acid-based surfactant.

The fluorine-containing surfactant may be one fluorine-containing surfactant, or may be a mixture containing two or more fluorine-containing surfactants.

The fluorine-containing surfactant preferably does not have a methylene group (-CH₂-), and more preferably does not have a C-H bond. The use of a fluorine-containing surfactant that does not have a methylene group (-CH₂-) or a C-H bond within the molecule enables fluoromonomer to be smoothly polymerized in the presence of an aqueous medium.

The number of H atoms that the hydrophobic group of the fluorine-containing surfactant has is preferably 0 or 1, and more preferably 0. The use of a fluorine-containing surfactant in which the number of H atoms bonded to carbon atoms constituting the hydrophobic group is small enables fluoromonomer to be smoothly polymerized in the presence of an aqueous medium. The number of carbon atoms in the hydrophobic group of the fluorine-containing surfactant having a hydrophobic group and a hydrophilic group is preferably 1 to 50, more preferably 3 to 20, and even more preferably 6 to 12. The hydrophobic group usually constitutes the above-described "portion excluding the anionic group" in the molecular structure of the fluorine-containing surfactant. Examples of the hydrophilic group include groups exemplified as the anionic group Y⁰. The fluorine-containing surfactant may be a saturated fluorinated surfactant in which all carbon atoms bonded to the hydrophobic group are substituted with fluorine atoms.

Examples of fluorine-containing surfactants, among the above-described anionic fluorine-containing surfactants, include compounds represented by general formula (N¹), compounds represented by general formula (N²), and compounds represented by general formula (N⁴):

Rfⁿ⁴-O-(CYⁿ¹F)ₚCF₂-Y⁰ (N⁴)

wherein Rfⁿ⁴ is a linear or branched, partially or fully fluorinated alkyl group having 1 to 12 carbon atoms and optionally containing an ether bond (provided that those having -CH₂- are excluded), Yⁿ¹ is H or F, p is 0 or 1, and Y⁰ is as defined above; and compounds represented by general formula (N⁵): 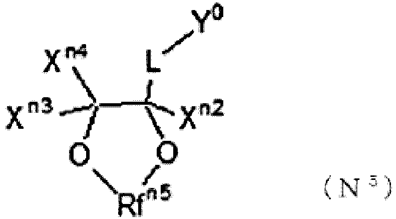 wherein Xⁿ², Xⁿ³, and Xⁿ⁴ may be the same or different and are each independently H, F, or a linear or branched, partially or fully fluorinated alkyl group having 1 to 6 carbon atoms and optionally containing an ether bond (provided that those having -CH₂- are excluded), provided that Xⁿ³ and Xⁿ⁴ are not simultaneously H; Rfⁿ⁵ is a linear or branched, partially or fully fluorinated alkylene group having 1 to 3 carbon atoms and optionally containing an ether bond (provided that those having -CH₂- are excluded); L is a linking group; and Y⁰ is as defined above, provided that the total number of carbon atoms in Xⁿ², Xⁿ³, Xⁿ⁴, and Rfⁿ⁵ is 18 or less.

Among the above-described anionic fluorine-containing surfactants, the fluorine-containing surfactant is preferably at least one selected from the group consisting of perfluorocarboxylic acid (I) represented by general formula (I), ω-H perfluorocarboxylic acid (II) represented by general formula (II), perfluoroethercarboxylic acid (III) represented by general formula (III), perfluoroalkylalkylenecarboxylic acid (IV) represented by general formula (IV), perfluoroalkoxyfluorocarboxylic acid (V) represented by general formula (V), perfluoroalkylsulfonic acid (VI) represented by general formula (VI), ω-H perfluorosulfonic acid (VII) represented by general formula (VII), perfluoroalkylalkylenesulfonic acid (VIII) represented by general formula (VIII), fluorocarboxylic acid (X) represented by general formula (X): Rf⁷-O-Rf⁸-O-CF₂-COOM
wherein Rf⁷ is a linear or branched, partially or fully fluorinated alkyl group having 1 to 6 carbon atoms and optionally containing an ether bond and/or a chlorine atom (provided that those having -CH₂- are excluded), Rf⁸ is a linear or branched, partially or fully fluorinated alkyl group having 1 to 6 carbon atoms (provided that those having -CH₂-are excluded), and M is as defined above, an alkoxyfluorosulfonic acid (XI) represented by general formula (XI): Rf⁹-O-CY¹FCF₂-SO₃M
wherein Rf⁹ is a linear or branched, partially or fully fluorinated alkyl group having 1 to 12 carbon atoms, optionally containing an ether bond, and optionally containing chlorine (provided that those having -CH₂- are excluded), Y¹ is H or F, and M is as defined above, a compound (XII) represented by general formula (XII): 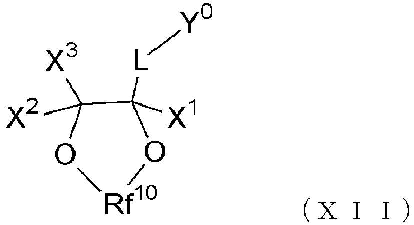
wherein X¹, X², and X³ may be the same or different and are each independently H, F, and a linear or branched, partially or fully fluorinated alkyl group having 1 to 6 carbon atoms and optionally containing an ether bond (provided that those having -CH₂- are excluded), provided that X² and X³ are not simultaneously H, Rf¹⁰ is a perfluoroalkylene group having 1 to 3 carbon atoms, L is a linking group, and Y⁰ is an anionic group, and
a compound (XIII) represented by general formula (XIII): Rf¹¹-O- (CF₂CF(CF₃)O)ₙ₉(CF₂O)ₙ₁₀CE₂COOM
wherein Rf¹¹ is a fluoroalkyl group having 1 to 5 carbon atoms containing chlorine (provided that those having -CH₂- are excluded), n9 is an integer of 0 to 3, n10 is an integer of 0 to 3, and M is as defined above. The use of such a fluorine-containing surfactant enables fluoromonomer to be smoothly polymerized in the presence of an aqueous medium.

Examples of the fluorine-containing surfactant include compounds represented by the following formulae. The fluorine-containing surfactant may be a mixture of these compounds.

F (CF₂)₇COOM,

F (CF₂)₅COOM,

H (CF₂)₆COOM,

H (CF₂)₇COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂F₅OCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COOM,

CF₂ClCF₂CF₂OCF₂CF(CF₃)OCF₂COOM,

CF₂ClCF(CF₃)OCF (CF₃)CF₂OCF₂COOM,

CF₂ClCF(CF₃)OCF₂CF(CF₃)OCF₂COOM,

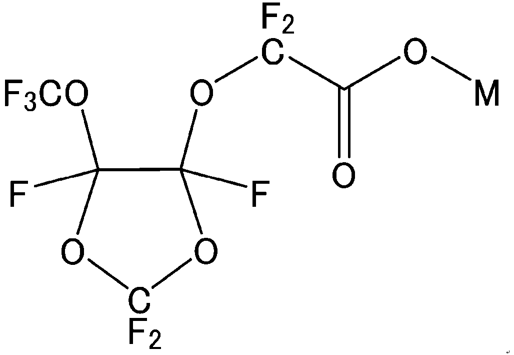

wherein M is H, a metal atom, NR⁷₄, optionally substituted imidazolium, optionally substituted pyridinium, or optionally substituted phosphonium, and R⁷ is H or an organic group.

The amount of the fluorine-containing surfactant added is preferably 10 ppm by mass to 10% by mass, is more preferably 100 ppm by mass or more and even more preferably 300 ppm by mass or more, and is more preferably 5% by mass or less and even more preferably 1% by mass or less, based on the aqueous medium.

### (Polymerization initiator)

The polymerization initiator used in the polymerization of fluoromonomer is not limited as long as it is a polymerization initiator capable of generating radicals within the polymerization temperature range, and known oil-soluble and/or water-soluble polymerization initiators can be used. Moreover, the polymerization initiator can also be combined with a reducing agent or the like to form a redox agent and initiate polymerization. The concentration of the polymerization initiator is suitably determined according to the type of monomer, the molecular weight of the target fluoropolymer, and the reaction rate.

The polymerization initiator may be an oil-soluble radical polymerization initiator or a water-soluble radical polymerization initiator.

The oil-soluble radical polymerization initiator may be a known oil-soluble peroxide, and representative examples include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl]peroxides such as di(ω-hydro-dodecafluoroheptanoyl)peroxide, di(ω-hydro-tetradecafluorooctanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The water-soluble radical polymerization initiator may be a known water-soluble peroxide, and examples include ammonium salts, potassium salts, and sodium salts of persulphuric acid, perboric acid, perchloric acid, perphosphoric acid, and percarbonic acid, organic peroxides of disuccinic acid peroxide and diglutaric acid peroxide, t-butyl permaleate, and t-butyl hydroperoxide. A reducing agent such as a sulfite may be contained together, and the amount thereof may be 0.1 to 20 times the amount of the peroxide.

For example, when performing the polymerization at a low temperature of 30°C or lower, the polymerization initiator used is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of persulfates include ammonium persulfate and potassium persulfate. Examples of sulfites include sodium sulfite and ammonium sulfite. In order to increase the decomposition rate of the initiator, the combination of the redox initiator preferably contains a copper salt or an iron salt. The copper salt may be copper(II) sulfate, and the iron salt may be iron(II) sulfate.

Examples of the redox initiator include potassium permanganate/oxalic acid, ammonium persulfate/bisulfite/iron sulfate, manganese triacetate/oxalic acid, cerium ammonium nitrate/oxalic acid, and bromate/bisulfite, and potassium permanganate/oxalic acid is preferable. When using a redox initiator, one of an oxidizing agent or a reducing agent may be introduced into a polymerization tank in advance, and then the other may be added continuously or intermittently to initiate polymerization. For example, when using potassium permanganate/oxalic acid, preferably, a polymerization tank is charged with oxalic acid, and potassium permanganate is continuously added thereto.

The amount of the polymerization initiator added is not limited, and the polymerization initiator is added in an amount that does not significantly decrease the polymerization rate (e.g., a concentration of several ppm in water) or more at once in the initial stage of polymerization, or added successively or continuously. The upper limit is within a range where the reaction temperature is allowed to increase while the polymerization reaction heat is removed through the device surface, and the upper limit is more preferably within a range where the polymerization reaction heat can be removed through the device surface.

It is preferable that the amount of the polymerization initiator added is such an amount that the fluoromonomer is not completely consumed in the polymerization and remains in the aqueous dispersion containing the fluoropolymer. The amount of the polymerization initiator added is preferably 5 ppm by mass or more, more preferably 10 ppm by mass or more, even more preferably 20 ppm by mass or more, and particularly preferably 50 ppm by mass or more, based on the mass of the aqueous medium. The amount of the polymerization initiator at the termination of polymerization can be calculated from the polymerization temperature, reaction time, and the half-life of the initiator. The concentration of the polymerization initiator at the termination of polymerization is preferably 5 ppm by mass or more, more preferably 10 ppm by mass or more, even more preferably 20 ppm by mass or more, and particularly preferably 50 ppm by mass or more, based on the mass of the aqueous medium.

By adding a decomposer when polymerizing fluoromonomer, the concentration of radicals during polymerization can be regulated. Examples of the decomposer include sulfites, bisulfites, bromates, diimines, oxalic acid, copper salts, and iron salts. Examples of sulfites include sodium sulfite and ammonium sulfite. The copper salt may be copper(II) sulfate, and the iron salt may be iron(II) sulfate. The amount of the decomposer added is in the range of 25 to 300% by mass based on the amount of the oxidizing agent combined as a polymerization initiator (a redox initiator). The amount of the decomposer added is preferably 25 to 150% by mass, and more preferably 50 to 100% by mass. Further, the decomposer is preferably added after 5% by mass of all fluoromonomer consumed in the polymerization reaction is polymerized, and more preferably after 10% by mass is polymerized. The amount of the decomposer added is preferably an amount corresponding to 0.1 to 20 ppm by mass and more preferably an amount corresponding to 3 to 10 ppm by mass of the mass of the aqueous medium used.

### (Aqueous medium)

The aqueous medium for use in the polymerization of fluoromonomer is a reaction medium in which the polymerization is performed, and means a liquid containing water. The aqueous medium is not limited as long as it contains water, and may be an aqueous medium containing water and, for example, a fluorine-free organic solvent such as ether or ketone, and/or a fluorine-containing organic solvent having a boiling point of 40°C or lower.

The aqueous medium is preferably an aqueous medium solely containing water or an aqueous medium solely containing water and a fluorine-free organic solvent, and is more preferably an aqueous medium solely containing water because the polymerization of the fluoromonomer can proceed smoothly and, also, deterioration of the efficiency of removing the fluorine-containing surfactant and the fluorine-containing compound by heat treatment after preparing the aqueous dispersion can be suppressed.

The moisture content in the aqueous medium is preferably 90% or more, more preferably 95% or more, even more preferably 99.0% or more, yet more preferably 99.5% or more, and particularly preferably 99.9% or more, and may be 100% based on the mass of the aqueous medium because the polymerization of the fluoromonomer can proceed smoothly and, also, deterioration of the efficiency of removing the fluorine-containing surfactant and the fluorine-containing compound by heat treatment after preparing the aqueous dispersion can be suppressed.

### (Fluoromonomer)

The fluoromonomer for use in polymerization has at least one fluorine atom and at least one double bond. The fluoromonomer is preferably at least one selected from the group consisting of tetrafluoroethylene (TFE), hexafluoropropylene (HFP), chlorotrifluoroethylene (CTFE), vinyl fluoride, vinylidene fluoride (VdF), trifluoroethylene, fluoroalkyl vinyl ether, fluoroalkyl ethylene, fluoroalkyl allyl ether, trifluoropropylene, pentafluoropropylene, trifluorobutene, tetrafluoroisobutene, hexafluoroisobutene, a fluoromonomer represented by general formula (100): CHX¹⁰¹=CX¹⁰²Rf¹⁰¹, wherein one of X¹⁰¹ and X¹⁰² is H, the other is F, and Rf¹⁰¹ is a linear or branched fluoroalkyl group having 1 to 12 carbon atoms, a fluorinated vinyl heterocyclic compound, and a monomer that provides a crosslinking site.

The fluoroalkyl vinyl ether (FAVE) is preferably, for example, at least one selected from the group consisting of:
a fluoromonomer represented by

   General formula (110): CF₂=CF-ORf¹¹¹

   wherein Rf¹¹¹ represents a perfluoro organic group;
a fluoromonomer represented by

   General formula (120): CF₂=CF-OCH₂-Rf¹²¹

   wherein Rf¹²¹ is a perfluoroalkyl group having 1 to 5 carbon atoms;
a fluoromonomer represented by

   General formula (130): CF₂=CFOCF₂ORf¹³¹

   wherein Rf¹³¹ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms;
a fluoromonomer represented by

   General formula (140): CF₂=CFO(CF₂CF(Y¹⁴¹)O)ₘ(CF₂)ₙF

   wherein Y¹⁴¹ represents a fluorine atom or a trifluoromethyl group; m is an integer of 1 to 4; and n is an integer of 1 to 4; and
a fluoromonomer represented by

   General formula (150): CF₂=CF-O-(CF₂CFY¹⁵¹-O)ₙ-(CFY¹⁵²)ₘ- A¹⁵¹

   wherein Y¹⁵¹ represents a fluorine atom, a chlorine atom, a - SO₂F group, or a perfluoroalkyl group; the perfluoroalkyl group optionally contains ether oxygen and a -SO₂F group; n represents an integer of 0 to 3; n Y¹⁵¹ groups are the same or different; Y¹⁵² represents a fluorine atom, a chlorine atom, or a -SO₂F group; m represents an integer of 1 to 5; m Y¹⁵² groups are the same or different; A¹⁵¹ represents -SO₂X¹⁵¹, -COZ¹⁵¹, or - POZ¹⁵²Z¹⁵³; X¹⁵¹ represents F, Cl, Br, I, -OR¹⁵¹, or -NR¹⁵²R¹⁵³; Z¹⁵¹, Z¹⁵², and Z¹⁵³ are the same or different, and represent - NR¹⁵⁴R¹⁵⁵ or -OR¹⁵⁶; and R¹⁵¹, R¹⁵², R¹⁵³, R¹⁵⁴, R¹⁵⁵, and R¹⁵⁶ are the same or different, and represent H, ammonium, an alkali metal, or an alkyl group, aryl group, or sulfonyl-containing group optionally containing a fluorine atom.

The "perfluoro organic group" as used herein means an organic group in which all hydrogen atoms bonded to the carbon atoms are replaced by fluorine atoms. The perfluoro organic group may have ether oxygen.

An example of the fluoromonomer represented by general formula (110) is a fluoromonomer in which Rf¹¹¹ is a perfluoroalkyl group having 1 to 10 carbon atoms. The perfluoroalkyl group preferably has 1 to 5 carbon atoms.

Examples of the perfluoro organic group in general formula (110) include a perfluoromethyl group, a perfluoroethyl group, a perfluoropropyl group, a perfluorobutyl group, a perfluoropentyl group, and a perfluorohexyl group.

Examples of the fluoromonomer represented by general formula (110) also include those represented by general formula (110) in which Rf¹¹¹ is a perfluoro(alkoxyalkyl) group having 4 to 9 carbon atoms; those in which Rf¹¹¹ is a group represented by the following formula: 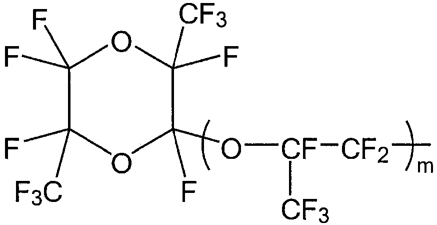
wherein m represents an integer of 0 or 1 to 4; and those in which Rf¹¹¹ is a group represented by the following formula: CF₃CF₂CF₂-(O-CF (CF₃)-CF₂)ₙ-
wherein n represents an integer of 1 to 4.

Of these, the fluoromonomer represented by general formula (110) is preferably a fluoromonomer represented by

General formula (160): CF₂=CF-ORf¹⁶¹

wherein Rf¹⁶¹ represents a perfluoroalkyl group having 1 to 10 carbon atoms. Rf¹⁶¹ is preferably a perfluoroalkyl group having 1 to 5 carbon atoms.

The fluoroalkyl vinyl ether is preferably at least one selected from the group consisting of fluoromonomers represented by general formulae (160), (130), and (140).

The fluoromonomer represented by general formula (160) is preferably at least one selected from the group consisting of perfluoro(methyl vinyl ether), perfluoro(ethyl vinyl ether), and perfluoro(propyl vinyl ether), and is more preferably at least one selected from the group consisting of perfluoro(methyl vinyl ether) and perfluoro(propyl vinyl ether).

The fluoromonomer represented by general formula (130) is preferably at least one selected from the group consisting of CF₂=CFOCF₂OCF₃, CF₂=CFOCF₂OCF₂CF₃, and CF₂=CFOCF₂OCF₂CF₂OCF₃.

The fluoromonomer represented by general formula (140) is preferably at least one selected from the group consisting of CF₂=CFOCF₂CF(CF₃)O(CF₂)₃F, CF₂=CFO(CF₂CF(CF₃)O)₂(CF₂)₃F, and CF₂=CFO(CF₂CF(CF₃)O)₂(CF₂)₂F.

The fluoromonomer represented by general formula (150) is preferably at least one selected from the group consisting of CF₂=CFOCF₂CF₂SO₂F, CF₂=CFOCF₂CF(CF₃)OCF₂CF₂SO₂F, CF₂=CFOCF₂CF(CF₂CF₂SO₂F)OCF₂CF₂SO₂F, and CF₂=CFOCF₂CF(SO₂F)₂.

The fluoromonomer represented by general formula (100) is preferably a fluoromonomer in which Rf¹⁰¹ is a linear fluoroalkyl group, and more preferably a fluoromonomer in which Rf¹⁰¹ is a linear perfluoroalkyl group. Rf¹⁰¹ preferably has 1 to 6 carbon atoms. Examples of the fluoromonomer represented by the general formula (100) include CH₂=CFCF₃, CH₂=CFCF₂CF₃, CH₂=CFCF₂CF₂CF₃, CH₂=CFCF₂CF₂CF₂H, CH₂=CFCF₂CF₂CF₂CF₃, CHF=CHCF₃ (E isomer), and CHF=CHCF₃ (Z isomer), and, in particular, 2,3,3,3-tetrafluoropropylene represented by CH₂=CFCF₃ is preferable.

The fluoroalkyl ethylene is preferably a fluoroalkyl ethylene represented by

General formula (170): CH₂=CH-(CF₂)ₙ-X¹⁷¹

wherein X¹⁷¹ is H or F, and n is an integer of 3 to 10, and more preferably at least one selected from the group consisting of CH₂=CH-C₄F₉ and CH₂=CH-C₆F₁₃.

An example of the fluoroalkyl allyl ether is a fluoromonomer represented by

General formula (180): CF₂=CF-CF₂-ORf¹¹¹

wherein Rf¹¹¹ represents a perfluoro organic group.

Rf¹¹¹ in general formula (180) is the same as Rf¹¹¹ in general formula (110). Rf¹¹¹ is preferably a perfluoroalkyl group having 1 to 10 carbon atoms or a perfluoroalkoxyalkyl group having 1 to 10 carbon atoms. The fluoroalkyl allyl ether represented by general formula (180) is preferably at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably at least one selected from the group consisting of CF₂=CF-CF₂-O-C₂F₅, CF₂=CF-CF₂-O-C₃F₇, and CF₂=CF-CF₂-O-C₄F₉, and even more preferably CF₂=CF-CF₂-O-CF₂CF₂CF₃.

An example of the fluorinated vinyl heterocyclic compound is a fluorinated vinyl heterocyclic compound represented by general formula (230): 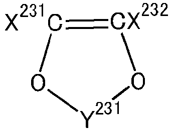 wherein X²³¹ and X²³² are each independently F, Cl, a methoxy group, or a fluorinated methoxy group; and Y²³¹ is represented by formula Y²³² or formula Y²³³: 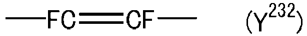 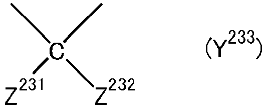 wherein Z²³¹ and Z²³² are each independently F or a fluorinated alkyl group having 1 to 3 carbon atoms.

The monomer that provides a crosslinking site is preferably at least one selected from the group consisting of:
a fluoromonomer represented by

   General formula (180): CX¹⁸¹₂=CX¹⁸²-R_{f}¹⁸¹CHR¹⁸¹X¹⁸³

   wherein X¹⁸¹ and X¹⁸² are each independently a hydrogen atom, a fluorine atom, or CH₃; R_{f}¹⁸¹ is a fluoroalkylene group, a perfluoroalkylene group, a fluoro(poly)oxyalkylene group, or a perfluoro(poly)oxyalkylene group; R¹⁸¹ is a hydrogen atom or CH₃; and X¹⁸³ is an iodine atom or a bromine atom;
a fluoromonomer represented by

   General formula (190): CX¹⁹¹₂=CX¹⁹²-R_{f}¹⁹¹X¹⁹³

   wherein X¹⁹¹ and X¹⁹² are each independently a hydrogen atom, a fluorine atom, or CH₃; R_{f}¹⁹¹ is a fluoroalkylene group, a perfluoroalkylene group, a fluoropolyoxyalkylene group, or a perfluoropolyoxyalkylene group; and X¹⁹³ is an iodine atom or a bromine atom;
a fluoromonomer represented by

   General formula (200): CF₂=CFO(CF₂CF(CF₃)O)ₘ(CF₂)ₙ-X²⁰¹

   wherein m is an integer of 0 to 5; n is an integer of 1 to 3; and X²⁰¹ is a cyano group, a carboxyl group, an alkoxycarbonyl group, an iodine atom, a bromine atom, or -CH₂I;
a fluoromonomer represented by

   General formula (210): CH₂=CFCF₂O(CF(CF₃)CF₂O)ₘ(CF(CF₃))ₙ- X²¹¹

   wherein m is an integer of 0 to 5; n is an integer of 1 to 3; and X²¹¹ is a cyano group, a carboxyl group, an alkoxycarbonyl group, an iodine atom, a bromine atom, or -CH₂OH; and
a monomer represented by

   General formula (220): CR²²¹R²²²=CR²²³-Z²²¹-CR²²⁴=CR²²⁵R²²⁶

   wherein R²²¹, R²²², R²²³, R²²⁴, R²²⁵, and R²²⁶ are the same or different, and are each a hydrogen atom or an alkyl group having 1 to 5 carbon atoms; Z²²¹ is a linear or branched alkylene group having 1 to 18 carbon atoms and optionally having an oxygen atom, a cycloalkylene group having 3 to 18 carbon atoms, an at least partially fluorinated alkylene group or oxyalkylene group having 1 to 10 carbon atoms, or a (per)fluoropolyoxyalkylene group which is represented by:

   -(Q)ₚ-CF₂O-(CF₂CF₂O)ₘ(CF₂O)ₙ-CF₂-(Q)ₚ-

   wherein Q is an alkylene group or an oxyalkylene group; p is 0 or 1; and m/n is 0.2 to 5, and has a molecular weight of 500 to 10,000.

X¹⁸³ and X¹⁹³ are each preferably an iodine atom. R_{f}¹⁸¹ and R_{f}¹⁹¹ are each preferably a perfluoroalkylene group having 1 to 5 carbon atoms. R¹⁸¹ is preferably a hydrogen atom. X²⁰¹ is preferably a cyano group, an alkoxycarbonyl group, an iodine atom, a bromine atom, or -CH₂I. X²¹¹ is preferably a cyano group, an alkoxycarbonyl group, an iodine atom, a bromine atom, or -CH₂OH.

The monomer that provides a crosslinking site is preferably at least one selected from the group consisting of CF₂=CFOCF₂CF(CF₃)OCF₂CF₂CN, CF₂=CFOCF₂CF(CF₃)OCF₂CF₂COOH, CF₂=CFOCF₂CF(CF₃)OCF₂CF₂CH₂I, CF₂=CFOCF₂CF₂CH₂I, CH₂=CFCF₂OCF(CF₃)CF₂OCF(CF₃)CN, CH₂=CFCF₂OCF(CF₃)CF₂OCF(CF₃)COOH, CH₂=CFCF₂OCF(CF₃)CF₂OCF(CF₃)CH₂OH, CH₂=CHCF₂CF₂I, CH₂=CH(CF₂)₂CH=CH₂, CH₂=CH(CF₂)₆CH=CH₂, and CF₂=CFO(CF₂)₅CN, and more preferably at least one selected from the group consisting of CF₂=CFOCF₂CF(CF₃)OCF₂CF₂CN and CF₂=CFOCF₂CF₂CH₂I.

In the polymerization, the fluoromonomer may be polymerized with a fluorine-free monomer. An example of the fluorine-free monomer is a hydrocarbon monomer that is reactive with the fluoromonomer. Examples of the hydrocarbon monomer include alkenes such as ethylene, propylene, butylene, and isobutylene; alkyl vinyl ethers such as ethyl vinyl ether, propyl vinyl ether, butyl vinyl ether, isobutyl vinyl ether, and cyclohexyl vinyl ether; vinyl esters such as vinyl acetate, vinyl propionate, vinyl n-butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl para-t-butylbenzoate, vinyl cyclohexanecarboxylate, monochlorovinyl acetate, vinyl adipate, vinyl acrylate, vinyl methacrylate, vinyl crotonate, vinyl sorbate, vinyl cinnamate, vinyl undecylenate, vinyl hydroxyacetate, vinyl hydroxypropionate, vinyl hydroxybutyrate, vinyl hydroxyvalerate, vinyl hydroxyisobutyrate, and vinyl hydroxycyclohexanecarboxylate; alkyl allyl ethers such as ethyl allyl ether, propyl allyl ether, butyl allyl ether, isobutyl allyl ether, and cyclohexyl allyl ether; alkyl allyl esters such as ethyl allyl ester, propyl allyl ester, butyl allyl ester, isobutyl allyl ester, and cyclohexyl allyl ester; and (meth)acrylic esters such as methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, and vinyl methacrylate.

The fluorine-free monomer may also be a functional group-containing hydrocarbon monomer (provided that a monomer that provides a crosslinking site is excluded). Examples of the functional group-containing hydrocarbon monomer include hydroxy alkyl vinyl ethers such as hydroxyethyl vinyl ether, hydroxypropyl vinyl ether, hydroxybutyl vinyl ether, hydroxyisobutyl vinyl ether, and hydroxycyclohexyl vinyl ether; fluorine-free monomers having a carboxyl group, such as acrylic acid, methacrylic acid, itaconic acid, succinic acid, succinic anhydride, fumaric acid, fumaric anhydride, crotonic acid, maleic acid, maleic anhydride, and perfluorobutenoic acid; fluorine-free monomers having a sulfo group, such as vinylsulfonic acid; fluorine-free monomers having a glycidyl group, such as glycidyl vinyl ether and glycidyl allyl ether; fluorine-free monomers having an amino group such as aminoalkyl vinyl ether and aminoalkyl allyl ether; fluorine-free monomers having an amide group such as (meth)acrylamide and methylol acrylamide; and fluorine-free monomers having a nitrile group, such as acrylonitrile and methacrylonitrile.

In the polymerization, desired fluoropolymer particles can be obtained by polymerizing one or two or more of the above fluoromonomers.

### (Chain transfer agent)

In the production method of the present disclosure, fluoromonomer can be polymerized also in the presence of a chain transfer agent. The use of a chain transfer agent enables the polymerization rate and the molecular weight to be regulated. Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane. As the chain transfer agent, hydrocarbon chain transfer agents or alcohols are preferable. Although the hydrocarbon chain transfer agent is not limited as long as it is a chain transfer agent containing only carbon atoms and hydrogen atoms, alkanes having 1 to 5 carbon atoms are preferable, and at least one selected from the group consisting of isopentane, methane, ethane, and propane is more preferable. As the alcohol, alcohols having 1 to 3 carbon atoms are preferable, and at least one selected from the group consisting of methanol, ethanol, 1-propanol, and 2-propanol is preferable.

The chain transfer agent may be a bromine compound or an iodine compound. An example of a polymerization method involving a bromine compound or an iodine compound is a method in which the fluoromonomer is polymerized in an aqueous medium substantially in the absence of oxygen and in the presence of a bromine compound or an iodine compound (iodine transfer polymerization). Representative examples of the bromine compound or the iodine compound to be used include compounds represented by the following general formula:

R^{a}IₓBr_{y}

wherein x and y are each an integer of 0 to 2 and satisfy 1 ≤ x + y ≤ 2, and R^{a} is a saturated or unsaturated fluorohydrocarbon group or chlorofluorohydrocarbon group having 1 to 16 carbon atoms, or a hydrocarbon group having 1 to 3 carbon atoms, and may contain an oxygen atom. By using a bromine compound or an iodine compound, iodine or bromine is introduced into the polymer, and serves as a crosslinking point.

Examples of the bromine compound or the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, and a monoiodomonobromo-substituted product, a diiodomonobromo-substituted product, and a (2-iodoethyl) and (2-bromoethyl)-substituted product of benzene, and one of these compounds may be used singly, or these compounds can also be mutually combined and used.

Among these, 1,4-diiodoperfluorobutane, 1,6-diiodoperfluorohexane, and 2-iodoperfluoropropane are preferably used from the viewpoint of polymerization reactivity, crosslinkability, availability, and the like.

The amount of the chain transfer agent used is usually 1 to 50,000 ppm by mass, and preferably 1 to 20,000 ppm by mass, based on the total amount of the fluoromonomer fed. The amount of the chain transfer agent used is preferably an amount such that the chain transfer agent is completely consumed during the polymerization of the fluoromonomer and does not remain in the aqueous dispersion containing the fluoropolymer so as not to deteriorate as much as possible the efficiency of removing the fluorine-containing surfactant and the fluorine-containing compound by heat treatment after preparing the aqueous dispersion. Accordingly, the amount of the chain transfer agent used is more preferably 10,000 ppm by mass or less, even more preferably 5,000 ppm by mass or less, yet more preferably 1,000 ppm by mass or less, particularly preferably 500 ppm by mass or less, and most preferably 200 ppm by mass or less, based on the total amount of fluoromonomer fed.

The chain transfer agent may be added to the reaction vessel at once before the beginning of the polymerization, may be added at once after the beginning of the polymerization, may be added in multiple portions during the polymerization, or may be added continuously during the polymerization.

### (Other additives)

Additives such as buffers, pH adjusters, stabilizing aids, and dispersion stabilizers can be used in the polymerization of fluoromonomer. In the polymerization of fluoromonomer, radical scavengers and decomposers may be added to regulate the polymerization rate and the molecular weight. Also, fluorine-free anionic surfactants, fluorine-free nonionic surfactants, fluorine-free cationic surfactants, and the like may be used in the polymerization of fluoromonomer.

The stabilizing aid is preferably paraffin wax, fluorine-containing oil, a fluorine-containing solvent, silicone oil, or the like. One stabilizing aid may be used singly, or two or more may be used in combination. The stabilizing aid is more preferably paraffin wax. The paraffin wax may be in the form of liquid, semi-solid, or solid at room temperature, and is preferably a saturated hydrocarbon having 12 or more carbon atoms. The paraffin wax usually preferably has a melting point of 40 to 65°C, and more preferably 50 to 65°C.

The amount of the stabilizing aid used is preferably 0.1 to 12% by mass, and more preferably 0.1 to 8% by mass, based on the mass of the aqueous medium used. Desirably, the stabilizing aid is sufficiently hydrophobic so that the stabilizing aid is completely separated from the aqueous dispersion after polymerization, and does not serve as a contaminating component.

### (Polymerization conditions)

Fluoromonomer can be polymerized at normal pressure and temperature. Usually, the polymerization temperature is 5 to 120°C, and the polymerization pressure is 0.05 to 10 MPaG. The polymerization temperature and the polymerization pressure are suitably determined according to the type of monomer, the molecular weight of the target fluoropolymer, the reaction rate, and the like. The polymerization pressure is preferably more than 0.05 MPa, more preferably more than 0.10 MPaG, and even more preferably more than 0.20 MPaG.

### (Fluoropolymer)

A fluoropolymer such as fluororesin or fluoroelastomer is obtained by polymerizing the fluoromonomer.

Examples of the fluororesin include a polytetrafluoroethylene (PTFE), a TFE/FAVE copolymer (PFA), a TFE/fluoroalkyl allyl ether copolymer, a TFE/HFP copolymer (FEP), an ethylene (Et)/TFE copolymer (ETFE), an Et/TFE/HFP copolymer, a polychlorotrifluoroethylene (PCTFE), a CTFE/TFE copolymer, an Et/CTFE copolymer, a polyvinyl fluoride (PVF), a polyvinylidene fluoride (PVdF), a VdF/TFE copolymer, a fluoromonomer/vinyl ester copolymer, and a polymer of a fluoromonomer represented by general formula (150).

In particular, the fluororesin is preferably at least one selected from the group consisting of PTFE, PFA, and FEP, and more preferably at least one selected from the group consisting of PTFE and PFA because the effects provided by the production method of the present disclosure are enhanced.

PTFE may be homo PTFE, or may be modified PTFE. Modified PTFE contains TFE unit and a modifying monomer unit that is based on a modifying monomer copolymerizable with TFE. PTFE may be high molecular weight PTFE that is non melt-processible and that fibrillates, or low molecular weight PTFE that is melt-fabricable and that does not fibrillate.

The modifying monomer is not limited as long as it can be copolymerized with TFE, and examples include perfluoroolefins such as hexafluoropropylene (HFP); chlorofluoroolefins such as CTFE; hydrogen-containing fluoroolefins such as trifluoroethylene and VdF; fluoroalkyl vinyl ether (FAVE); fluoroalkyl allyl ether; perfluoroalkylethylene; ethylene; and fluorine-containing vinyl ether having a nitrile group. One modifying monomer may be used singly, or multiple modified monomers may be used.

The fluoroelastomer may be a partially fluorinated elastomer or a perfluoroelastomer.

Examples of the partially fluorinated elastomer include a VdF-based fluoroelastomer, a TFE/propylene (Pr)-based fluoroelastomer, a TFE/propylene/VdF-based fluoroelastomer, an ethylene/HFP-based fluoroelastomer, an ethylene/HFP/VdF-based fluoroelastomer, an ethylene/HFP/TFE-based fluoroelastomer, and an ethylene/HFP/FAVE-based elastomer. In particular, at least one selected from the group consisting of a VdF-based fluoroelastomer and a TFE/propylene-based fluoroelastomer is preferable.

Specific examples of the VdF-based fluoroelastomer include a VdF/HFP-based elastomer, a VdF/HFP/TFE-based elastomer, a VdF/CTFE-based elastomer, a VdF/CTFE/TFE-based elastomer, an elastomer based on VdF/a fluoromonomer represented by general formula (100), an elastomer based on VdF/a fluoromonomer represented by general formula (100)/TFE, an elastomer based on VdF/perfluoro(methyl vinyl ether) (PMVE), a VdF/PMVE/TFE-based elastomer, and a VdF/PMVE/TFE/HFP-based elastomer. The elastomer based on VdF/a fluoromonomer represented by general formula (100) is preferably a VdF/CH₂=CFCF₃-based elastomer, and the elastomer based on VdF/a fluoromonomer represented by general formula (100)/TFE is preferably a VdF/TFE/CH₂=CFCF₃-based elastomer.

The perfluoroelastomer is preferably at least one selected from the group consisting of perfluoroelastomers containing TFE, such as a copolymer of TFE/a fluoromonomer represented by general formula (110), (130), or (140) and a copolymer of TFE/a fluoromonomer represented by general formula (110), (130), or (140)/a monomer that provides a crosslinking site.

The aqueous dispersion in one embodiment contains, as a fluoropolymer, a fluoropolymer having a fluoroalkyl vinyl ether unit.

The aqueous dispersion containing a fluoropolymer having a fluoroalkyl vinyl ether unit can be prepared by polymerizing fluoroalkyl vinyl ether as a fluoromonomer. When fluoroalkyl vinyl ether is used as a fluoromonomer, a compound represented by general formula (2) (perfluoroalkanoic acid) may be produced during the polymerization of the fluoromonomer. The aqueous dispersion containing a fluoropolymer having a fluoroalkyl vinyl ether unit may contain a compound represented by general formula (2) as a water-soluble, fluorine-containing compound.

The content of the fluoroalkyl vinyl ether unit in the fluoropolymer is preferably 0.0000001 to 30 mol%, more preferably 0.000001 mol% or more, and even more preferably 0.00001 mol% or more, and is preferably 25 mol% or less, more preferably 20 mol% or less, and particularly preferably 8 mol % or less, based on all polymerization units constituting the fluoropolymer.

Examples of fluoropolymers having such a polymerization unit include:
fluororesins such as PTFE modified with fluoroalkyl vinyl ether (FAVE) and a TFE/FAVE copolymer (PFA);
partially fluorinated elastomers such as an ethylene/HFP/FAVE-based elastomer, a VdF/PMVE-based elastomer, a VdF/PMVE/TFE-based elastomer, and a VdF/PMVE/TFE/HFP-based elastomer; and
perfluoroelastomers.

The aqueous dispersion in one embodiment contains low molecular weight PTFE as a fluoropolymer.

Low molecular weight PTFE is generally produced by polymerization involving polymerization conditions for producing low molecular weight PTFE, or can be produced by reducing the molecular weight of high molecular weight PTFE obtained by polymerization by a known method (such as thermal decomposition or radiation decomposition). In the production method of the present disclosure, an aqueous dispersion containing low molecular weight PTFE can be prepared by polymerization involving polymerization conditions for producing low molecular weight PTFE.

In the present disclosure, high molecular weight PTFE means PTFE that is non melt-processible and that fibrillate. On the other hand, low molecular weight PTFE means PTFE that is melt-fabricable and that does not fibrillate.

Non-melt processibility means a property that the melt flow rate cannot be measured at a temperature higher than the crystal melting point in accordance with ASTM D 1238 and D 2116.

The presence or absence of fibrillatability can be determined by "paste extrusion", which is a representative method of forming a "high molecular weight PTFE powder" which is a powder made of a TFE polymer. Usually, high molecular weight PTFE can be paste-extruded because it is fibrillatable. When a non-fired molded product obtained by paste extrusion shows substantially no strength or elongation (for example, when it shows an elongation of 0% and is broken when stretched), it can be regarded as non-fibrillatable.

The high molecular weight PTFE described above preferably has a standard specific gravity (SSG) of 2.130 to 2.280. The standard specific gravity is measured by the water replacement method in accordance with ASTM D 792 using a sample formed in accordance with ASTM D 4895 89. In the present disclosure, the "high molecular weight" means that the standard specific gravity is within the above range.

Low molecular weight PTFE has a melt viscosity of 1 × 10² to 7 × 10⁵ Pa·s at 380°C. The "low molecular weight" as used herein means that the melt viscosity is within the above range.

### (Aqueous dispersion)

Polymerization of the fluoromonomer yields an aqueous dispersion containing the fluoropolymer. The content of the fluoropolymer in the aqueous dispersion as polymerized is usually 8 to 50% by mass based on the aqueous dispersion.

It has now been found that a polymerization radical represented by general formula (1) is contained in the aqueous dispersion prepared by polymerizing the fluoromonomer. Due to its high reactivity, this polymerization radical may react with other compounds to produce byproducts or to cause unintended reactions to proceed.

General formula (1): R-(CF₂-CF₂)ₙ· (wherein R is a monovalent group, n is an integer of 1 or more, and · represents an unpaired electron)

The above polymerization radical tends to be generated particularly when tetrafluoroethylene is polymerized as the fluoromonomer in the presence of a chain transfer agent and a water-soluble radical polymerization initiator.

### (After-treatment)

In the production method of the present disclosure, after preparing an aqueous dispersion containing a fluoropolymer, a gas containing oxygen is bubbled into the aqueous dispersion, or the aqueous dispersion is brought into contact with an oxidizing agent, or the aqueous dispersion is brought into contact with an alcohol. In the production method of the present disclosure, all of these methods may be carried out.

By carrying out at least one of these methods, the oxygen saturation degree of the aqueous dispersion can be increased. The oxygen saturation degree of the aqueous dispersion is preferably 53.5% or higher, more preferably 60% or higher, even more preferably 70% or higher, and particularly preferably 80% or higher. The oxygen saturation degree of the aqueous dispersion may be 99% or lower.

In the present disclosure, the oxygen saturation degree refers to the proportion of the actual amount of dissolved oxygen to the amount of saturated dissolved oxygen in water at 1 atm. The oxygen saturation degree can be measured by an optical dissolved oxygen meter.

In addition, by carrying out at least one of the above methods, the content of the polymerization radical in the aqueous dispersion is reduced.

### (Use of gas containing oxygen)

By bubbling a gas containing oxygen into the aqueous dispersion, the oxygen saturation degree of the aqueous dispersion is increased. In addition, by bubbling a gas containing oxygen into the aqueous dispersion, the polymerization radical represented by general formula (1) is converted into an oxidation radical represented by general formula (2), and the content of the polymerization radical in the aqueous dispersion is reduced.
General formula (1): R-(CF₂-CF₂)ₙ· (wherein R is a monovalent group, n is an integer of 1 or more, and · represents an unpaired electron)
General formula (2): R-(CF₂-CF₂)ₙO-O· (wherein R is a monovalent group, n is an integer of 1 or more, and · represents an unpaired electron)

In general formulae (1) and (2), R is a monovalent group. As R, COOH, OH, SO₃H, CF₃, CH₃, or R¹¹-R¹²- (wherein R¹¹ represents COOH, OH, SO₃H, CF₃, or CH₃, and R¹² represents a chain formed by polymerization of tetrafluoroethylene and a modifying monomer) is preferable.

As the method for bubbling a gas containing oxygen into the aqueous dispersion, for example, a method in which a gas containing oxygen is bubbled into the aqueous dispersion to generate bubbles and bring the aqueous dispersion into contact with the gas containing oxygen (bubbling method) can be employed. When bubbling the gas containing oxygen into the aqueous dispersion, the flow rate of the gas is, for example, 1 to 30 L/min.

Examples of the gas containing oxygen include oxygen gas and air. The oxygen content in the gas containing oxygen may be 20 to 100% by volume.

The temperature at which the aqueous dispersion and the gas containing oxygen are brought into contact is preferably 5 to 99°C, more preferably 15°C or higher, and more preferably lower than 35°C.

The pressure at which the aqueous dispersion and the gas containing oxygen are brought into contact may be normal pressure.

The time for which the aqueous dispersion and the gas containing oxygen are brought into contact is preferably 1 minute or longer, more preferably 5 minutes or longer, even more preferably 10 minutes or longer, and particularly preferably 30 minutes or longer, and is preferably 48 hours or shorter, more preferably 24 hours or shorter, and even more preferably 12 hours or shorter.

### (Use of oxidizing agent)

By bringing the aqueous dispersion into contact with an oxidizing agent, the oxygen saturation degree of the aqueous dispersion is increased. In addition, by bringing the aqueous dispersion into contact with an oxidizing agent, the polymerization radical represented by general formula (1) is converted into an oxidation radical represented by general formula (2), and the content of the polymerization radical in the aqueous dispersion is reduced.

As the method for bringing the aqueous dispersion into contact with an oxidizing agent, for example, a method in which an oxidizing agent is added to the aqueous dispersion, thereby bringing the aqueous dispersion into contact with the oxidizing agent can be employed.

Examples of the oxidizing agent include gaseous oxidizing agents such as ozone gas, fluorine gas, chlorine gas, bromine gas, and iodine gas; inorganic acids and inorganic acid salts such as nitric acid, nitric acid, sulfurous acid, sulfuric acid, persulfuric acid, hydrochloric acid, hypochlorous acid, chlorous acid, chloric acid, perchloric acid, hydrofluoric acid, bromic acid, iodic acid, phosphoric acid, boric acid, chromic acid, dichromic acid, and permanganic acid; and peroxides such as hydrogen peroxide. Among these, hydrogen peroxide is particularly preferable as the oxidizing agent.

The amount of the oxidizing agent to be brought into contact with the aqueous dispersion is preferably 1 to 500 ppm by mass, more preferably 3 ppm by mass or more, and more preferably 200 ppm by mass or less, based on the mass of the aqueous dispersion.

The temperature at which the aqueous dispersion and the oxidizing agent are brought into contact is preferably 5 to 99°C, more preferably 15°C or higher, and more preferably lower than 35°C.

The pressure at which the aqueous dispersion and the oxidizing agent are brought into contact may be normal pressure.

The time for which the aqueous dispersion and the oxidizing agent are brought into contact is preferably 1 minute or longer, more preferably 5 minutes or longer, even more preferably 10 minutes or longer, and particularly preferably 30 minutes or longer, and is preferably 48 hours or shorter, more preferably 24 hours or shorter, and even more preferably 12 hours or shorter.

### (Use of alcohol)

By bringing the aqueous dispersion into contact with an alcohol, the oxygen saturation degree of the aqueous dispersion is increased. In addition, by bringing the aqueous dispersion into contact with an alcohol, the polymerization radical contained in the aqueous dispersion abstracts H from a C-H bond of the alcohol, and the polymerization radical is deactivated, reducing the content of the polymerization radical in the aqueous dispersion.

As the method for bringing the aqueous dispersion into contact with an alcohol, for example, a method in which an alcohol is added to the aqueous dispersion can be employed.

The alcohol is preferably an alcohol having 1 to 10 carbon atoms, more preferably at least one selected from the group consisting of methanol, ethanol, 1-propanol, 2-propanol, 1-butanol, and 2-butanol, and even more preferably at least one selected from the group consisting of methanol and ethanol.

The amount of the alcohol to be brought into contact with the aqueous dispersion is preferably 1 to 500 ppm by mass, more preferably 3 ppm by mass or more, and more preferably 200 ppm by mass or less, based on the mass of the aqueous dispersion.

The temperature at which the aqueous dispersion and the alcohol are brought into contact is preferably 5 to 99°C, more preferably 15°C or higher, and more preferably lower than 35°C.

The pressure at which the aqueous dispersion and the alcohol are brought into contact may be normal pressure.

The time for which the aqueous dispersion and the alcohol are brought into contact is preferably 1 minute or longer, more preferably 5 minutes or longer, even more preferably 10 minutes or longer, and particularly preferably 30 minutes or longer, and is preferably 48 hours or shorter, more preferably 24 hours or shorter, and even more preferably 12 hours or shorter.

By the above production methods, it is possible to produce a fluoropolymer aqueous dispersion in which the content of the polymerization radical is reduced.

### (Fluoropolymer aqueous dispersion)

The present disclosure also relates to a fluoropolymer aqueous dispersion in which the content of the polymerization radical is reduced. That is, the fluoropolymer aqueous dispersion of the present disclosure has an oxygen saturation degree of 53.5% or higher. The oxygen saturation degree of the aqueous dispersion is preferably 53.5% or higher, more preferably 60% or higher, even more preferably 70% or higher, and particularly preferably 80% or higher. The oxygen saturation degree of the aqueous dispersion may be 99% or lower.

The fluoropolymer aqueous dispersion of the present disclosure contains a fluoropolymer and an aqueous medium, and it is preferable that the content of the polymerization radical represented by general formula (1) is 0 g⁻¹ or less and the content of the oxidation radical represented by general formula (2) is 0.1 g⁻¹ or more. The content of the oxidation radical may be 4.1 g⁻¹ or more, and may be 9.0 g⁻¹ or less. Although the content of the polymerization radical is theoretically not less than 0 g⁻¹, a measured value below 0 g⁻¹ may be obtained in some cases.
General formula (1): R-(CF₂-CF₂)ₙ· (wherein R is a monovalent group, n is an integer of 1 or more, and · represents an unpaired electron); and
General formula (2): R-(CF₂-CF₂)ₙO-O· (wherein R is a monovalent group, n is an integer of 1 or more, and · represents an unpaired electron).

The fluoropolymer aqueous dispersion may further contain the above-described aqueous medium.

The content of the fluoropolymer in the fluoropolymer aqueous dispersion is preferably 8 to 50% by mass, more preferably 15% by mass or more, and more preferably 40% by mass or less.

The fluoropolymer aqueous dispersion may be diluted or concentrated. Examples of the concentration method include a phase separation concentration method, an electroconcentration method, an electrophoresis method, an ion exchanger method, and a membrane concentration method. The phase separation concentration method, ion exchanger method, and membrane concentration method can be carried out under conventionally known treatment conditions, and can be carried out by, but are not limited to, the methods disclosed in International Publication No. WO 2004/050719, National Publication of International Patent Application No. 2002-532583, and Japanese Patent Laid-Open No. 55-120630.

The fluoropolymer aqueous dispersion may further contain the above-described fluorine-containing surfactant. The content of the fluorine-containing surfactant in the fluoropolymer aqueous dispersion may be 200 ppb by mass or more, 300 ppb by mass or more, or 400 ppb by mass or more, and may be 10% by mass or less, 1% by mass or less, or 0.5% by mass or less, based on the mass of the fluoropolymer.

The fluorine-containing surfactant in the fluoropolymer aqueous dispersion may be removed from the aqueous dispersion by a known method such as a phase separation concentration method, an ion exchanger method, or a membrane concentration method. The fluoropolymer aqueous dispersion in one embodiment is substantially free from the fluorine-containing surfactant.

In the present disclosure, the expression "substantially free from the fluorine-containing surfactant" means that the content of the fluorine-containing surfactant in the fluoropolymer aqueous dispersion is 10 ppm by mass or less, and it is preferably 1 ppm by mass or less, more preferably 100 ppb by mass or less, even more preferably 10 ppb by mass or less, still more preferably 1 ppb by mass or less, and particularly preferably the fluorine-containing surfactant is below the detection limit as measured by liquid chromatography-mass spectrometry (LC/MS).

The content of the fluorine-containing surfactant in the fluoropolymer aqueous dispersion can be measured by liquid chromatography-mass spectrometry (LC/MS/MS).

First, methanol is added to the fluoropolymer aqueous dispersion to perform extraction, and the resulting extract is subjected to LC/MS/MS analysis. To further increase extraction efficiency, treatment by Soxhlet extraction, ultrasonic treatment, or the like may be performed.

From the resulting LC/MS/MS spectrum, molecular weight information is extracted, and a match with the structural formula of a candidate fluorine-containing surfactant is checked.

Thereafter, aqueous solutions having five or more different content levels of the confirmed fluorine-containing surfactant are prepared, and LC/MS/MS analysis of the aqueous solution of each content is carried out, and the relationship between the content and the area for the content is plotted, and a calibration curve is drawn.

Then, using the calibration curve, the area of the LC/MS/MS chromatogram of the fluorine-containing surfactant in the extract can be converted to the content of the fluorine-containing surfactant.

The fluoropolymer aqueous dispersion of the present disclosure is one in which the content of the highly active polymerization radical is reduced, and which also has a small content of impurities (byproducts), and therefore can be used in various applications.

The fluoropolymer aqueous dispersion containing PTFE as a fluoropolymer is preferably mixed with a nonionic surfactant to stabilize and further concentrate the aqueous dispersion, and then further mixed with, depending on its purpose, an organic or inorganic filler to form a composition and used in a variety of applications. The aqueous dispersion, when applied to a metal or ceramic substrate, can provide a coating surface having non-stickiness, a low coefficient of friction, and excellent gloss, smoothness, abrasion resistance, weather resistance, and heat resistance, which is suitable for coating of rolls, cooking utensils, and the like, and impregnation processing of glass cloth, and the like.

An organosol can also be prepared from the fluoropolymer aqueous dispersion containing PTFE as a fluoropolymer. The organosol may contain PTFE and an organic solvent, examples of the organic solvent include ether-based solvents, ketone-based solvents, alcohol-based solvents, amide-based solvents, ester-based solvents, aliphatic hydrocarbon-based solvents, aromatic hydrocarbon-based solvents, and halogenated hydrocarbon-based solvents, and N-methyl-2-pyrrolidone and dimethylacetamide can be suitably used. The organosol may be prepared by the method described in, for example, International Publication No. WO 2012/002038.

The fluoropolymer aqueous dispersion containing PTFE as a fluoropolymer is also preferably used as a processing aid. When used as a processing aid, the aqueous dispersion can be mixed with a host polymer or the like to improve the melt strength of the host polymer in melt processing and to improve the mechanical strength, electric properties, incombustibility, anti-drop performance during combustion, and slidability of the resulting polymer.

The fluoropolymer aqueous dispersion containing PTFE as a fluoropolymer is also preferably used as a binder for batteries or in dustproof applications.

The fluoropolymer aqueous dispersion containing PTFE as a fluoropolymer is also preferably combined with a resin other than PTEF and then used as a processing aid. The fluoropolymer aqueous dispersion is suitable as a raw material of PTFE disclosed in, for example, Japanese Patent Laid-Open No. 11-49912, U.S. Patent No. 5,804,654, Japanese Patent Laid-Open No. 11-29679, and Japanese Patent Laid-Open No. 2003-2980. The processing aid containing the fluoropolymer aqueous dispersion is not inferior in any way to the processing aids disclosed in the publications.

The fluoropolymer aqueous dispersion containing PTFE as a fluoropolymer is also preferably mixed with an aqueous dispersion of a melt-fabricable fluororesin so that the components coagulate to form co-coagulated powder. The co-coagulated powder is suitable as a processing aid.

Examples of the melt-fabricable fluororesin include FEP, PFA, TFE/fluoroalkyl allyl ether copolymers, ETFE, and ethylene/TFE/HFP copolymers (EFEP), and, in particular, PFA, TFE/fluoroalkyl allyl ether copolymers, and FEP are preferable.

The aqueous dispersion also preferably contains a melt-fabricable fluororesin. Examples of the melt-fabricable fluororesin include FEP, PFA, TFE/fluoroalkyl allyl ether copolymers, ETFE, and EFEP. The aqueous dispersion containing the melt-fabricable fluororesin may be used as a coating material. The melt-fabricable fluororesin enables sufficient fusion of PTFE particles, thus improving the film-formability and providing the resulting film with gloss.

The fluorine-free resin to which the co-coagulated powder is added may be in the form of a powder, pellets, or an emulsion. The addition is preferably performed while applying a shear force by a known method such as extrusion kneading or roll kneading from the viewpoint of sufficiently mixing each resin.

The fluoropolymer aqueous dispersion containing PTFE as a fluoropolymer is also preferably used as a dust suppression treatment agent. The dust suppression treatment agent can be used in a method for suppressing dust of a dust-generating substance by fibrillating PTFE by mixing with a dust-generating substance and applying a compression-shearing action to the mixture at a temperature of 20 to 200°C, such as a method disclosed in Japanese Patent No. 2827152 or Japanese Patent No. 2538783. The fluoropolymer aqueous dispersion can be suitably used for, for example, the dust suppression treatment agent composition described in International Publication No. WO 2007/004250, and can be suitably used in the dust control treatment method described in International Publication No. WO 2007/000812 as well.

The dust suppression treatment agent is suitably used in dust suppression treatment in the fields of building-products, soil stabilizers, solidifying materials, fertilizers, landfill of incineration ash and harmful substance, explosion proof equipment, cosmetics, and sands for pet excretion represented by cat sand.

The fluoropolymer aqueous dispersion containing PTFE as a fluoropolymer is also preferably used as a raw material for producing PTFE fibers by a dispersion spinning method. The dispersion spinning method is a method in which the aqueous dispersion of PTFE and an aqueous dispersion of a matrix polymer are mixed and the mixture is extruded to form an intermediate fiber structure, and then the intermediate fiber structure is fired to decompose the matrix polymer and sinter PTFE particles, thereby providing PTFE fibers.

The fluoropolymer aqueous dispersion containing a TFE/FAVE copolymer (PFA) or a TFE/fluoroalkyl allyl ether copolymer as a fluoropolymer may also be suitably mixed with a nonionic surfactant, and optionally polyethersulfone, polyamide-imide, and/or polyimide, and metal powder are dissolved or dispersed in an organic solvent, and thereby a primer composition can be obtained. This primer composition may be used in a method of applying a fluororesin to a metal surface. The method includes applying the primer composition to a metal surface, applying the fluoropolymer composition to the resulting primer layer, and firing the fluoropolymer composition layer together with the primer layer.

While embodiments have been described above, it will be understood that various changes in form and detail can be made without departing from the gist and scope of the claims.
<1> According to the first aspect of the present disclosure, provided is
   a method for producing a fluoropolymer aqueous dispersion, the method comprising:
   polymerizing a fluoromonomer in the presence of a fluorine-containing surfactant, a polymerization initiator, and an aqueous medium, thereby preparing an aqueous dispersion containing a fluoropolymer; and
   bubbling a gas containing oxygen into the aqueous dispersion, or bringing the aqueous dispersion into contact with an oxidizing agent, or bringing the aqueous dispersion into contact with an alcohol, thereby obtaining a fluoropolymer aqueous dispersion.
<2> According to the second aspect of the present disclosure, provided is
   the production method according to the first aspect, wherein the alcohol is at least one selected from the group consisting of methanol, ethanol, 1-propanol, 2-propanol, 1-butanol, and 2-butanol.
<3> According to the third aspect of the present disclosure, provided is
   the production method according to the first or second aspect, wherein the oxidizing agent is hydrogen peroxide.
<4> According to the fourth aspect of the present disclosure, provided is
   the production method according to any one of the first to third aspects, wherein the polymerization initiator is a water-soluble radical polymerization initiator.
<5> According to the fifth aspect of the present disclosure, provided is
   the production method according to any one of the first to fourth aspects,
   wherein the fluoropolymer is at least one selected from the group consisting of a polytetrafluoroethylene, a tetrafluoroethylene/fluoroalkyl vinyl ether copolymer, a tetrafluoroethylene/fluoroalkyl allyl ether copolymer, a tetrafluoroethylene/hexafluoropropylene copolymer, an ethylene/tetrafluoroethylene copolymer, an ethylene/tetrafluoroethylene/hexafluoropropylene copolymer, a polychlorotrifluoroethylene, a chlorotrifluoroethylene/tetrafluoroethylene copolymer, an ethylene/chlorotrifluoroethylene copolymer, a polyvinyl fluoride, a polyvinylidene fluoride, a vinylidene fluoride/tetrafluoroethylene copolymer, a fluoromonomer/vinyl ester copolymer, a polymer of a fluoromonomer represented by general formula (150) : CF₂=CF-O-(CF₂CFY¹⁵¹-O)ₙ-(CFY¹⁵²)ₘ-A¹⁵¹, wherein Y¹⁵¹ represents a fluorine atom, a chlorine atom, a - SO₂F group, or a perfluoroalkyl group; the perfluoroalkyl group optionally contains ether oxygen and a -SO₂F group; n represents an integer of 0 to 3; n Y¹⁵¹ groups are the same or different; Y¹⁵² represents a fluorine atom, a chlorine atom, or a -SO₂F group; m represents an integer of 1 to 5; m Y¹⁵² groups are the same or different; A¹⁵¹ represents -SO₂X¹⁵¹, -COZ¹⁵¹, or - POZ¹⁵²Z¹⁵³; X¹⁵¹ represents F, Cl, Br, I, -OR¹⁵¹, or -NR¹⁵²R¹⁵³; Z¹⁵¹, Z¹⁵², and Z¹⁵³ are the same or different, and represent - NR¹⁵⁴R¹⁵⁵ or -OR¹⁵⁶; and R¹⁵¹, R¹⁵², R¹⁵³, R¹⁵⁴, R¹⁵⁵, and R¹⁵⁶ are the same or different, and represent H, ammonium, an alkali metal, or an alkyl group, aryl group, or sulfonyl-containing group optionally containing a fluorine atom, and a fluoroelastomer.
<6> According to the sixth aspect of the present disclosure, provided is
   the production method according to any one of the first to fifth aspects,
   wherein the fluoromonomer is polymerized in the presence of, in addition to the fluorine-containing surfactant, the polymerization initiator, and the aqueous medium, a chain transfer agent,
   wherein the fluoromonomer contains at least tetrafluoroethylene, the polymerization initiator is a persulfate, and the chain transfer agent is at least one selected from the group consisting of an alkane having 1 to 5 carbon atoms and an alcohol having 1 to 3 carbon atoms,
   wherein the fluoropolymer is at least one selected from the group consisting of a polytetrafluoroethylene and a tetrafluoroethylene/fluoroalkyl vinyl ether copolymer, and
   wherein, after preparing the aqueous dispersion containing the fluoropolymer,
      a gas containing 20 to 100% by volume of oxygen is bubbled into the aqueous dispersion at a flow rate of 1 to 30 L/min to generate bubbles and bring the aqueous dispersion into contact with the gas containing oxygen at 5 to 99°C for 5 minutes or longer, or
      the aqueous dispersion is brought into contact with hydrogen peroxide in an amount corresponding to 1 to 500 ppm by mass based on a mass of the aqueous dispersion at 5 to 99°C for 1 minute or longer, or
      the aqueous dispersion is brought into contact with an alcohol having 1 to 10 carbon atoms in an amount corresponding to 1 to 500 ppm by mass based on a mass of the aqueous dispersion at 5 to 99°C for 1 minute or longer, thereby obtaining an aqueous dispersion having an oxygen saturation degree of 80% or higher.
<7> According to the seventh aspect of the present disclosure, provided is
   a fluoropolymer aqueous dispersion comprising a fluoropolymer and an aqueous medium, wherein the aqueous dispersion has an oxygen saturation degree of 53.5% or higher.
<8> According to the eighth aspect of the present disclosure, provided is
   the aqueous dispersion according to the seventh aspect, wherein a content of a polymerization radical represented by general formula (1) is 0 g⁻¹ or less and a content of an oxidation radical represented by general formula (2) is 0.1 g⁻¹ or more:
   General formula (1): R-(CF₂-CF₂)ₙ· (wherein R is a monovalent group, n is an integer of 1 or more, and represents an unpaired electron); and
   General formula (2): R-(CF₂-CF₂)ₙO-O· (wherein R is a monovalent group, n is an integer of 1 or more, and represents an unpaired electron).
<9> According to the ninth aspect of the present disclosure, provided is
   the aqueous dispersion according to the seventh or eighth aspect, wherein the fluoropolymer is at least one selected from the group consisting of a polytetrafluoroethylene and a tetrafluoroethylene/fluoroalkyl vinyl ether copolymer, and the aqueous dispersion has an oxygen saturation degree of 80% or higher.

### EXAMPLES

Next, embodiments of the present disclosure will now be described by way of Examples, but the present disclosure is not limited only to the Examples.

The numerical values in the Examples were measured by the following methods.

### <Radical amount in aqueous dispersion>

The contents of the polymerization radical and the oxidation radical in the aqueous dispersion were determined using electron spin resonance (ESR) spectroscopy.
Polymerization radical: HOOC-(CF₂-CF₂)ₙ· (wherein n is an integer of 1 or more, and · represents an unpaired electron)
Oxidation radical: HOOC-(CF₂-CF₂)ₙO-O· (wherein n is an integer of 1 or more, and · represents an unpaired electron)

The content of the polymerization radical was determined from the intensity of the peak at g = 2.0056 appearing in the first derivative spectrum obtained by analyzing the aqueous dispersion using electron spin resonance (ESR) spectroscopy. The content of the oxidation radical was determined from the intensity of the peak at g = 2.0218 appearing in the first derivative spectrum obtained by analyzing the aqueous dispersion using electron spin resonance (ESR) spectroscopy.

### Analytical conditions

Device: JES-FR30EX manufactured by JEOL Ltd.
Measurement temperature: 23 ± 3°C
Microwave frequency: 9.42 GHz
Microwave output: 0.4 mW
Center magnetic field: 347.548 mT
Sweep width: ±25 mT
Sweep time: 60 s
Time constant: 0.03 s
Magnetic field modulation amplitude: 0.32 mT
Number of scans: 1
Modulation frequency: 100 kHz
Marker: Mn²⁺

### <Oxygen saturation degree>

The measurement was conducted using an optical dissolved oxygen meter FDO380.

### Comparative Example 1

A polymerization reaction of TFE was carried out by the method in accordance with Example 7 of International Publication No. WO 2009/020187, obtaining a PTFE aqueous dispersion.

### Example 1

A PTFE aqueous dispersion was obtained in the same manner as in Comparative Example 1. Thereafter, the autoclave was opened, and 4 kg of the obtained PTFE aqueous dispersion 1 was transferred to another container, into which air was bubbled at a flow rate of 2 L/min for 6 minutes to perform bubbling.

### Example 2

Except that the bubbling time was changed to 10 minutes, the same operations as Example 1 were performed.

### Example 3

Except that the bubbling time was changed to 15 minutes, the same operations as Example 1 were performed.

### Example 4

Except that the bubbling time was changed to 30 minutes, the same operations as Example 1 were performed.

### Example 5

Except that the bubbling time was changed to 60 minutes, the same operations as Example 1 were performed.

### Comparative Example 2

Except that the gas used for bubbling was changed from air to nitrogen, that the flow rate was changed to 5 L/min, and that the bubbling time was changed to 60 minutes, the same operations as Example 1 were performed.

### Example 6

Except that the flow rate was changed to 5 L/min and that the bubbling time was changed to 6 minutes, the same operations as Example 1 were performed.

### Example 7

Except that the bubbling time was changed to 30 minutes, the same operations as Example 6 were performed.

### Example 8

Except that the bubbling time was changed to 60 minutes, the same operations as Example 6 were performed.

### Example 9

Except that the bubbling time was changed to 120 minutes, the same operations as Example 6 were performed.

### Comparative Example 3

A polymerization reaction of PFA was carried out by the method in accordance with Example 1 (1) of Japanese Patent Laid-Open No. 62-541, obtaining a PFA aqueous dispersion 1.

### Reference Example 4

A polymerization reaction of PFA was carried out by the method in accordance with Example 1 (1) and (2) of Japanese Patent Laid-Open No. 62/541, obtaining a PFA aqueous dispersion 2.

### Reference Example 5

A polymerization reaction of PFA was carried out by the method in accordance with Example 1 (1) and (2), and the phase separation and concentration operation of Japanese Patent Laid-Open No. 62-541, obtaining a PFA aqueous dispersion 3.

### Example 10

In the same manner as in Comparative Example 3, PFA aqueous dispersion 1 was polymerized. Thereafter, the autoclave was opened, and 4 kg of the obtained PTFE aqueous dispersion 1 was transferred to another container, into which air was bubbled at a flow rate of 5 L/min for 120 minutes to perform bubbling.

### Example 11

In the same manner as in Reference Example 4, PFA aqueous dispersion 2 was polymerized. Thereafter, the autoclave was opened, and 4 kg of the obtained PTFE aqueous dispersion 1 was transferred to another container, into which air was bubbled at a flow rate of 5 L/min for 120 minutes to perform bubbling.

### Example 12

In the same manner as in Comparative Example 5, PFA aqueous dispersion 3 was polymerized. Thereafter, the autoclave was opened, and 4 kg of the obtained PTFE aqueous dispersion 1 was transferred to another container, into which air was bubbled at a flow rate of 5 L/min for 120 minutes to perform bubbling.

### Example 13

In the same manner as in Comparative Example 1, a PTFE aqueous dispersion was polymerized. Thereafter, the autoclave was opened, and 4 kg of the obtained PTFE aqueous dispersion 1 was transferred to another container. Under stirring, the temperature inside the vessel was raised, and when the temperature inside the vessel reached 80°C, an aqueous solution in which 3.5 g of hydrogen peroxide [H₂O₂] as an oxidizing agent was dissolved in 10 ml of deionized water was added, and the mixture was stirred in an air atmosphere for 10 minutes.

### Example 14

Except that the amount of H₂O₂ added was changed to 35.4 g, the same operations as Example 13 were performed.

### Example 15

Except that the aqueous hydrogen peroxide solution was changed to 1.7 g of methanol [MeOH], the same operations as Example 13 were performed.

### Example 16

Except that the amount of MeOH added was changed to 16.8 g, the same operations as Example 15 were performed.

### Example 17

Except that the amount of MeOH added was changed to 168 g, the same operations as Example 15 were performed.

### Example 18

Except that the amount of MeOH added was changed to 1,680 g, the same operations as Example 15 were performed.

Various physical properties of the PTFE aqueous dispersions obtained in Examples and Comparative Examples were evaluated by the above-described methods. The results are shown in Tables 1 to 3.

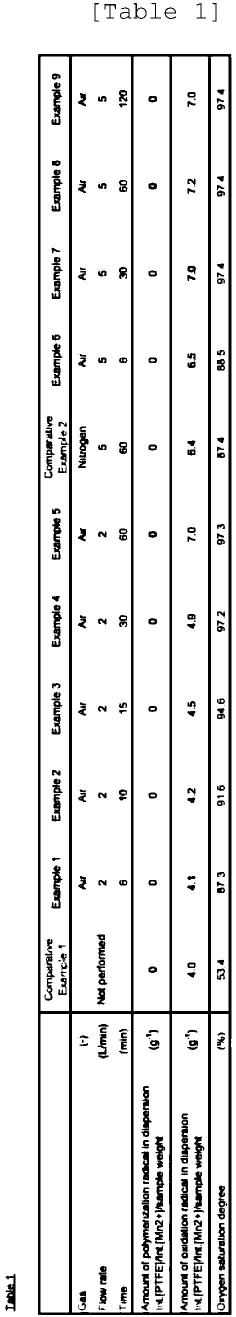

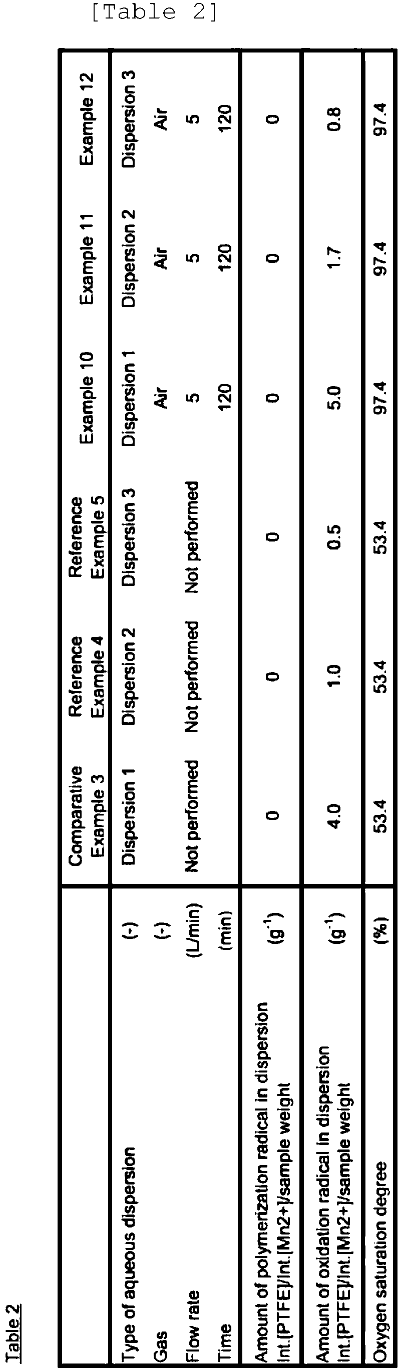

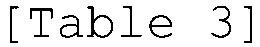

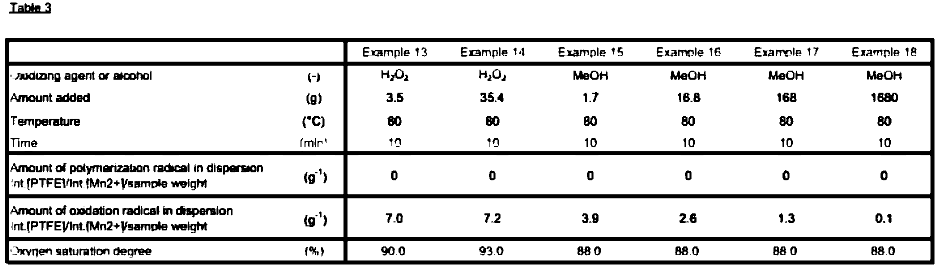

Figure 1 shows the first derivative spectra (horizontal axis: g value (-), vertical axis: Int.[PTFE]/Int.[Mn²⁺]/sample weight (g⁻¹)) of the aqueous dispersions obtained in Example 6, Example 8, Example 13, Example 14, and Comparative Example 1. From the results shown in Figure 1, it is seen that the first derivative spectra of the aqueous dispersions obtained by the production method of the present disclosure exhibit only a singlet, with no triplet observed. This result indicates that no polymerization radical is present in the aqueous dispersions, and that only the oxidation radical is present.

## Claims

1. A method for producing a fluoropolymer aqueous dispersion, the method comprising:
polymerizing a fluoromonomer in the presence of a fluorine-containing surfactant, a polymerization initiator, and an aqueous medium, thereby preparing an aqueous dispersion containing a fluoropolymer; and
bubbling a gas containing oxygen into the aqueous dispersion, or bringing the aqueous dispersion into contact with an oxidizing agent, or bringing the aqueous dispersion into contact with an alcohol, thereby obtaining a fluoropolymer aqueous dispersion.

2. The production method according to claim 1, wherein the alcohol is at least one selected from the group consisting of methanol, ethanol, 1-propanol, 2-propanol, 1-butanol, and 2-butanol.

3. The production method according to claim 1 or 2, wherein the oxidizing agent is hydrogen peroxide.

4. The production method according to any one of claims 1 to 3, wherein the polymerization initiator is a water-soluble radical polymerization initiator.

5. The production method according to any one of claims 1 to 4,
wherein the fluoropolymer is at least one selected from the group consisting of a polytetrafluoroethylene, a tetrafluoroethylene/fluoroalkyl vinyl ether copolymer, a tetrafluoroethylene/fluoroalkyl allyl ether copolymer, a tetrafluoroethylene/hexafluoropropylene copolymer, an ethylene/tetrafluoroethylene copolymer, an ethylene/tetrafluoroethylene/hexafluoropropylene copolymer, a polychlorotrifluoroethylene, a chlorotrifluoroethylene/tetrafluoroethylene copolymer, an ethylene/chlorotrifluoroethylene copolymer, a polyvinyl fluoride, a polyvinylidene fluoride, a vinylidene fluoride/tetrafluoroethylene copolymer, a fluoromonomer/vinyl ester copolymer, a polymer of a fluoromonomer represented by general formula (150) : CF₂=CF-O-(CF₂CFY¹⁵¹-O)ₙ-(CFY¹⁵²)ₘ₋A¹⁵¹, wherein Y¹⁵¹ represents a fluorine atom, a chlorine atom, a - SO₂F group, or a perfluoroalkyl group; the perfluoroalkyl group optionally contains ether oxygen and a -SO₂F group; n represents an integer of 0 to 3; n Y¹⁵¹ groups are the same or different; Y¹⁵² represents a fluorine atom, a chlorine atom, or a -SO₂F group; m represents an integer of 1 to 5; m Y¹⁵² groups are the same or different; A¹⁵¹ represents -SO₂X¹⁵¹, -COZ¹⁵¹, or - POZ¹⁵²Z¹⁵³; X¹⁵¹ represents F, Cl, Br, I, -OR¹⁵¹, or -NR¹⁵²R¹⁵³; Z¹⁵¹, Z¹⁵², and Z¹⁵³ are the same or different, and represent - NR¹⁵⁴R¹⁵⁵ or -OR¹⁵⁶; and R¹⁵¹, R¹⁵², R¹⁵³, R¹⁵⁴, R¹⁵⁵, and R¹⁵⁶ are the same or different, and represent H, ammonium, an alkali metal, or an alkyl group, aryl group, or sulfonyl-containing group optionally containing a fluorine atom, and a fluoroelastomer.

6. The production method according to any one of claims 1 to 5,
wherein the fluoromonomer is polymerized in the presence of, in addition to the fluorine-containing surfactant, the polymerization initiator, and the aqueous medium, a chain transfer agent,
wherein the fluoromonomer contains at least tetrafluoroethylene, the polymerization initiator is a persulfate, and the chain transfer agent is at least one selected from the group consisting of an alkane having 1 to 5 carbon atoms and an alcohol having 1 to 3 carbon atoms,
wherein the fluoropolymer is at least one selected from the group consisting of a polytetrafluoroethylene and a tetrafluoroethylene/fluoroalkyl vinyl ether copolymer, and
wherein, after preparing the aqueous dispersion containing the fluoropolymer,
a gas containing 20 to 100% by volume of oxygen is bubbled into the aqueous dispersion at a flow rate of 1 to 30 L/min to generate bubbles and bring the aqueous dispersion into contact with the gas containing oxygen at 5 to 99°C for 5 minutes or longer, or
the aqueous dispersion is brought into contact with hydrogen peroxide in an amount corresponding to 1 to 500 ppm by mass based on a mass of the aqueous dispersion at 5 to 99°C for 1 minute or longer, or
the aqueous dispersion is brought into contact with an alcohol having 1 to 10 carbon atoms in an amount corresponding to 1 to 500 ppm by mass based on a mass of the aqueous dispersion at 5 to 99°C for 1 minute or longer,
thereby obtaining an aqueous dispersion having an oxygen saturation degree of 80% or higher.

7. A fluoropolymer aqueous dispersion comprising a fluoropolymer and an aqueous medium, wherein the aqueous dispersion has an oxygen saturation degree of 53.5% or higher.

8. The aqueous dispersion according to claim 7, wherein a content of a polymerization radical represented by general formula (1) is 0 g⁻¹ or less and a content of an oxidation radical represented by general formula (2) is 0.1 g⁻¹ or more:
General formula (1): R-(CF₂-CF₂)ₙ· (wherein R is a monovalent group, n is an integer of 1 or more, and · represents an unpaired electron); and
General formula (2): R-(CF₂-CF₂)ₙO-O· (wherein R is a monovalent group, n is an integer of 1 or more, and · represents an unpaired electron).

9. The aqueous dispersion according to claim 7 or 8, wherein the fluoropolymer is at least one selected from the group consisting of a polytetrafluoroethylene and a tetrafluoroethylene/fluoroalkyl vinyl ether copolymer, and the aqueous dispersion has an oxygen saturation degree of 80% or higher.
